(19) Europäisches Patentamt
European Patent Office
Office européen des brevets

(11) EP 2 832 808 A1

# (12) EUROPEAN PATENT APPLICATION

published in accordance with Art. 153(4) EPC

(43) Date of publication:
**04.02.2015 Bulletin 2015/06**

(21) Application number: **13768575.6**

(22) Date of filing: **26.03.2013**

(51) Int Cl.:
***C09J 7/02*** (2006.01)
***B32B 27/00*** (2006.01)
***C09D 5/16*** (2006.01)
***C09D 7/12*** (2006.01)
***C09D 183/04*** (2006.01)

(86) International application number:
**PCT/JP2013/058654**

(87) International publication number:
**WO 2013/146718 (03.10.2013 Gazette 2013/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2012 JP 2012075631**

(71) Applicant: **Nitto Denko Corporation**
**Ibaraki-shi, Osaka 567-8680 (JP)**

(72) Inventors:
- **KURATA, Naoki**
**Ibaraki-shi**
**Osaka 567-8680 (JP)**
- **NAITO, Tomonari**
**Ibaraki-shi**
**Osaka 567-8680 (JP)**
- **SUEYOSHI, Taiki**
**Ibaraki-shi**
**Osaka 567-8680 (JP)**
- **SUZUKI, Satoru**
**Ibaraki-shi**
**Osaka 567-8680 (JP)**
- **HARA, Kazutaka**
**Ibaraki-shi**
**Osaka 567-8680 (JP)**

(74) Representative: **Müller-Boré & Partner Patentanwälte PartG mbB**
**Friedenheimer Brücke 21**
**80639 München (DE)**

## (54) ADHESIVE TAPE FOR PREVENTING AQUATIC BIOFOULING

(57) Provided is a pressure-sensitive adhesive tape for preventing adhesion of an aquatic organism that: can express good adhesion even in water; has good mechanical characteristics; facilitates its peeling operation; has a small surface roughness; can maintain an antifouling effect over a long time period; has a small load on a human body or an environment; has a light weight; can maintain stable quality; can effectively prevent the adhesion of an aquatic organism; and when bonded onto a ship's hull, can make contributions to improving fuel efficiency and reducing $CO_2$ emission. The pressure-sensitive adhesive tape for preventing adhesion of an aquatic organism of the present invention includes an antifouling layer, a base material layer, and a pressure-sensitive adhesive layer in the stated order, in which the antifouling layer has a ten-point average surface roughness Rz of 5.0 μm or less.

FIG. 1

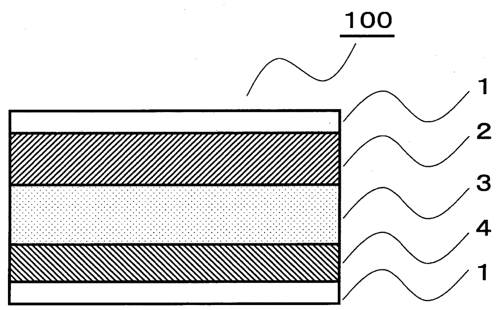




Printed by Jouve, 75001 PARIS (FR)

## Description

### Technical Field

The present invention relates to a pressure-sensitive adhesive tape for preventing adhesion of an aquatic organism. More specifically, the present invention relates to a pressure-sensitive adhesive tape for preventing adhesion of an aquatic organism for preventing an aquatic organism from adhering to an underwater structure (such as a ship, a buoy, a harbor facility, a maritime oil field facility, a water passage for power plant cooling water, awaterpassage for factory coolingwater, orawater f loatingpassage) to proliferate.

### Background Art

A marine organism such as a barnacle, an oyster, a blue mussel, a hydra, a serpula, a sea squirt, a moss animal, a sea lettuce, green laver, or attached diatom has been adhering to a portion of an underwater structure such as a ship in contact with seawater to proliferate, thereby causing an unpreferred state such as a reduction in facility mechanical performance, e.g., an increase in fluid resistance or a reduction in thermal conductivity, or diffusion of the adhering marine organism to overseas. In addition, an operation of removing the adhering marine organism requires a great deal of labor and an enormous amount of time, which results in economic loss.

Hitherto, the underwater structure has been painted with an antifouling paint in order that such damage as described above may be prevented. The antifouling paint contains a toxic antifouling agent, which, for example, was formerly an organotin compound and is currently cuprous oxide. Although adhesion and growth of the marine organism can be suppressed almost completely by the toxicity of the antifouling paint, the toxic antifouling agent such as the organotin compound or cuprous oxide causes a serious problem in the long run because the agent adversely affects a human body or an environment to no small extent. In addition, when the antifouling paint is dried after its painting, about 30 wt% of an organic solvent (VOC) volatilizes to adversely affect a work environment or a surrounding environment. In spray-type painting, in addition to discharge of the VOC to the atmosphere, 10 wt% to 20 wt% of the paint is said to be scattered to the surroundings by the wind. Meanwhile, when the structure painted with the antifouling paint that has been used for many years is repainted with a new one, the antifouling paint that has become old is peeled with a sandblast or a metal grinder. At that time, however, a large amount of coating film pieces each containing the toxic antifouling agent such as the organotin compound or cuprous oxide are scattered to the surroundings to adversely affect an operator or the environment. In addition, the peeled antifouling paint is treated as industrial waste. Accordingly, the paint has been causing a major problem.

As described above, the conventional antifouling paint has an adhesion-inhibiting action on a marine organism, but adversely affects a human body and an environment to a large extent, and many problems have remained unsolved to date.

In addition, a self polishing antifouling paint (SPC: self polishing copolymer), which is the current mainstream antifouling paint, is liable to undergo progressive hydrolysis, resulting in: a large surface roughness of a coating film; a gradual increase in the surface roughness of the coating film with increasing duration of use; and peeling of the coating film. Accordingly, drag between the painted underwater structure and seawater is high, which causes , for example, a degradation in fuel efficiency or an increase in $CO_2$ emission when the underwater structure is a ship's hull. Further, the coating film having a large surface roughness promotes adhesion of a marine organism such as a barnacle, and thus its antifouling performance reduces.

In view of the foregoing, a pressure-sensitive adhesive tape obtained by bonding a copper foil and a pressure-sensitive adhesive onto each other through a primer has been proposed (see Patent Literatures 1 and 2). However, such pressure-sensitive adhesive tape involves a problem in that the tape may adversely affect the environment because its suppression of the adhesion of a marine organism is realized with the copper component of the copper foil. In addition, the peeling adhesive strength of such pressure-sensitive adhesive tape for an FRP plate is designed to be extremely large, specifically, 2.6 kg/25 mm or 7.5 kg/25 mm (after primer pretreatment). Accordingly, it is difficult to consider that the pressure-sensitive adhesive tape after its use can be easily peeled manually when the pressure-sensitive adhesive tape is replaced with another tape. In the end, a great deal of labor is needed because an action such as shaving is needed. In addition, copper is a substance having a specific gravity as heavy as 8.94 $g/cm^3$ and hence the use of copper in a movable structure such as a ship is not preferred economically because the use deteriorates its fuel efficiency.

In addition, an antifouling tape formed of two layers, i.e. , a silicone rubber and a pressure-sensitive adhesive has been proposed (see Patent Literature 3). However, the silicone rubber layer responsible for an antifouling effect is the silicone rubber itself because the layer is free of an antifouling agent such as an oil. When the layer is free of the antifouling agent, the layer can suppress the adhesion of a marine organism for a short time period because of its water repellency but cannot maintain its antifouling effect for a long time period. In addition, extreme concern is raised about the strength of such antifouling tape because the tape is constituted of the two layers, i.e., the silicone rubber and the

pressure-sensitive adhesive. In general, the silicone rubber has an extremely low rupture point strength. Accordingly, the peeling of such antifouling tape after its use is not realistic because it is difficult to peel the tape while maintaining its tape state.

In addition, a sheet-shaped tape obtained by providing a silicone elastomer on a base material through an undercoating agent and providing a pressure-sensitive adhesive layer on the opposite side of the base material has been proposed (see Patent Literature 4). However, the application of the tape to a pressure-sensitive adhesive tape for preventing adhesion of an aquatic organism lacks reality because Patent Literature 4 does not have, for example, any description concerning the composition of a pressure-sensitive adhesive that can be used in water or any description concerning the adhesive strength of the tape. In addition, when an antifouling tape is applied to an underwater structure, its flexibility or stretchability needs to be designed so that the tape can be applied to a curved surface or an acute angle surface. In addition, the strength of the antifouling tape needs to be designed so that the base material may not break during the peeling of the tape after its use. However, Patent Literature 4 has no such description. Accordingly, the application of the tape to the pressure-sensitive adhesive tape for preventing adhesion of an aquatic organism lacks reality.

Citation List

Patent Literature

[PTL 1] JP 63-62487 B2
[PTL 2] JP 1-54397 B2
[PTL 3] JP 3000101 B2
[PTL 4] JP 2002-69246 A

Summary of Invention

Technical Problem

An object of the present invention is to provide a pressure-sensitive adhesive tape for preventing adhesion of an aquatic organism that: can express good adhesion even in water; has good mechanical characteristics; facilitates its peeling operation; has a small surface roughness; can maintain an antifouling effect over a long time period; has a small load on a human body or an environment; has a light weight; can maintain stable quality; can effectively prevent the adhesion of an aquatic organism; and when bonded onto a ship's hull, can make contributions to improving fuel efficiency and reducing $CO_2$ emission.

Solution to Problem

A pressure-sensitive adhesive tape for preventing adhesion of an aquatic organism of the present invention includes an antifouling layer, a base material layer, and a pressure-sensitive adhesive layer in the stated order, in which the antifouling layer has a ten-point average surface roughness Rz of 5.0 μm or less.

In a preferred embodiment, the antifouling layer has an arithmetic average surface roughness Ra of 1.0 μm or less.

In a preferred embodiment, the antifouling layer includes a silicone resin.

In a preferred embodiment, the antifouling layer includes an antifouling agent.

In a preferred embodiment, the content of the antifouling agent with respect to the silicone resin is 2 wt% or more.

In a preferred embodiment, the antifouling agent includes at least one kind selected from a silicone oil, a liquid paraffin, and a surfactant.

In a preferred embodiment, the base material layer has an elongation of 100% or more and a rupture point stress of 10 MPa or more.

In a preferred embodiment, the pressure-sensitive adhesive layer has a 180° peeling adhesive strength at 23°C and a tension speed of 300 mm/min of 30 N/20 mm or less.

In a preferred embodiment, when the pressure-sensitive adhesive layer is brought into contact with seawater, a compressive modulus of elasticity of a portion in the pressure-sensitive adhesive layer brought into contact with the seawater is 1.1 times or more as large as a compressive modulus of elasticity in the pressure-sensitive adhesive layer before the contact with the seawater.

Advantageous Effects of Invention

According to one embodiment of the present invention, it is possible to provide the pressure-sensitive adhesive tape for preventing adhesion of an aquatic organism that: can express good adhesion even in water; has good mechanical characteristics; facilitates its peeling operation; has a small surface roughness; can maintain an antifouling effect over a long time period; has a small load on a human body or an environment; has a light weight; can maintain stable quality; can effectively prevent the adhesion of an aquatic organism; and when bonded onto a ship's hull, can make contributions to improving fuel efficiency and reducing $CO_2$ emission.

Brief Description of Drawing

FIG. 1 is a schematic sectional view of an example of a pressure-sensitive adhesive tape for preventing adhesion of an aquatic organism of the present invention.

Description of Embodiments

A pressure-sensitive adhesive tape for preventing adhesion of an aquatic organism of the present invention includes an antifouling layer, a base material layer, and a pressure-sensitive adhesive layer in the stated order. The pressure-sensitive adhesive tape for preventing adhesion of an aquatic organism of the present invention may include any appropriate other layer to the extent that the effects of the present invention are not impaired as long as the tape includes the antifouling layer, the base material layer, and the pressure-sensitive adhesive layer in the stated order. The thickness of the pressure-sensitive adhesive tape for preventing adhesion of an aquatic organism of the present invention is set to any appropriate thickness depending on the thickness of each layer in the tape to the extent that the effects of the present invention are not impaired. The thickness of the pressure-sensitive adhesive tape for preventing adhesion of an aquatic organism of the present invention is preferably from 50 μm to 5,000 μm.

FIG. 1 illustrates a schematic sectional view of an example of the pressure-sensitive adhesive tape for preventing adhesion of an aquatic organism of the present invention. A pressure-sensitive adhesive tape **100** for preventing adhesion of an aquatic organism of the present invention includes an antifouling layer **2,** a base material layer **3,** and a pressure-sensitive adhesive layer **4** in the stated order. As illustrated in FIG. **1,** the surface of the antifouling layer **2** or the surface of the pressure-sensitive adhesive layer **4** may be provided with a release film **1**.

The anti fouling layer has a ten-point average surface roughness Rz of 5.0 μm or less. The ten-point average surface roughness Rz of the antifouling layer is preferably 4. 5 μm or less, more preferably 4.0 μm or less, still more preferably 3.0 μm or less, particularly preferably 2.5 μm or less, most preferably 2.0 μm or less. The lower limit value of the ten-point average surface roughness Rz of the antifouling layer is desirably as small as possible, but in consideration of a material or the like, is preferably 0.001 μm or more, more preferably 0.01 μm or more, still more preferably 0.1 μm or more. When the ten-point average surface roughness Rz of the antifouling layer falls within the range, the pressure-sensitive adhesive tape for preventing adhesion of an aquatic organism of the present invention can effectively prevent the adhesion of an aquatic organism, and when bonded onto a ship's hull, can make contributions to improving fuel efficiency and reducing $CO_2$ emission. It should be noted that a method of measuring the ten-point average surface roughness Rz is described later.

The antifouling layer has an arithmetic average surface roughness Ra of preferably 1.0 μm or less, more preferably 0.8 μm or less, still more preferably 0.6 μm or less, particularly preferably 0.4 μm or less, most preferably 0.2 μm or less. The lower limit value of the arithmetic average surface roughness Ra of the antifouling layer is desirably as small as possible, but in consideration of a material or the like, is preferably 0.001 μm or more, more preferably 0.01 μm or more. When the arithmetic average surface roughness Ra of the antifouling layer falls within the range, the pressure-sensitive adhesive tape for preventing adhesion of an aquatic organism of the present invention can more effectively prevent the adhesion of an aquatic organism, and when bonded onto a ship's hull, can make greater contributions to improving fuel efficiency and reducing $CO_2$ emission. It should be noted that a method of measuring the arithmetic average surface roughness Ra is described later.

In the present invention, means for controlling the ten-point average surface roughness Rz of the antifouling layer within the above-mentioned range, preferably means for controlling also the arithmetic average surface roughness Ra of the antifouling layer within the above-mentioned range is exemplified by appropriate selection of the composition of the antifouling layer or appropriate selection of a method of forming the antifouling layer.

The antifouling layer preferably contains a silicone resin. Any appropriate content may be adopted as the content of the silicone resin in the antifouling layer depending on the content of any other component such as an antifouling agent. The content of the silicone resin in the antifouling layer is preferably from 30 wt% to 98 wt%, more preferably from 40 wt% to 97 wt%, still more preferably from 45 wt% to 96 wt%, particularly preferably from 50 wt% to 95 wt%. When the content of the silicone resin in the antifouling layer falls within the range, the antifouling effect of the antifouling

layer can be sufficiently expressed and the mechanical characteristics of the antifouling layer can be sufficiently expressed. When the content of the silicone resin in the antifouling layer is less than 30 wt%, the mechanical characteristics of the antifouling layer may reduce. When the content of the silicone resin in the antifouling layer exceeds 98 wt%, the antifouling effect of the antifouling layer cannot be sufficiently expressed in some cases.

Any appropriate silicone resin may be adopted as the silicone resin to the extent that the effects of the present invention are not impaired. The number of kinds of the silicone resins may be only one, or may be two or more. Such silicone resin may be a silicone resin that is liquid at normal temperature, or may be a silicone resin that is solid at normal temperature. Inaddition, such silicone resin may be a condensation-type silicone resin, or may be an addition-type silicone resin. In addition, such silicone resin may be a one-component silicone resin to be dried alone, or may be a two-component silicone resin to be compounded with a curing agent. In the present invention, out of those resins, a one-component room temperature vulcanizing (RTV) resin or a two-component room temperature vulcanizing (RTV) resin is preferred. Examples of the one-component RTV resin include KE-3475, KE-45S, KE-445, KE-44, KE-441, KE-3497, and KE-4896 manufactured by Shin-Etsu Chemical Co. , Ltd. Examples of the two-component RTV resin include KE-106, KE-66, KE-1031, and KE-1800 manufactured by Shin-Etsu Chemical Co., Ltd.

In order that the easy removability of an aquatic organism in the pressure-sensitive adhesive tape for preventing adhesion of an aquatic organism of the present invention may be improved, the silicone resin is preferably a silicone res in having the following physical property: the surface of the resin undergoes an elastic deformation by virtue of, for example, a water pressure at the time of the removal of the organism by water washing to facilitate the peeling of an adhering substance. Such silicone resin has a 100% modulus (tensile stress) of preferably from 0.1 MPa to 10 MPa, more preferably from 0.1 MPa to 6 MPa. In addition, such silicone resin is preferably soluble in an organic solvent.

The anti fouling layer preferably contains an anti fouling agent. The number of kinds of the antifouling agents may be only one, or may be two or more. When the antifouling layer contains the antifouling agent, the antifouling agent can express an action of maintaining its high antifouling effect for a long time period because of the following reasons: the agent migrates to the surface of the silicone resin as a matrix and covers the surface with an antifouling substance to suppress the adhesion of an aquatic organism to the surface of the silicone resin, and the agent is nonhydrolyzable.

The content of the antifouling agent in the antifouling layer with respect to the silicone resin is preferably 2 wt% or more, more preferably from 2 wt% to 200 wt%, still more preferably from 3 wt% to 150 wt%, particularly preferably from 4 wt% to 120 wt%, most preferably from 5 wt% to 100 wt%. When the content of the antifouling agent with respect to the silicone resin falls within the range, the antifouling effect of the antifouling layer can be sufficiently expressed, and the external appearance characteristics and mechanical characteristics of the antifouling layer can be sufficiently expressed. When the content of the antifouling agent with respect to the silicone resin is less than 2 wt%, the antifouling effect of the antifouling layer cannot be sufficiently expressed in some cases. When the content of the antifouling agent with respect to the silicone resin exceeds 200 wt%, the external appearance of a final molded article or coating film may be unsatisfactory, and the antifouling layer may be reduced in strength to be unable to maintain its antifouling property.

Any appropriate antifouling agent may be adopted as the antifouling agent to the extent that the effects of the present invention are not impaired. Examples of such antifouling agent include a silicone oil, a liquid paraffin, a surfactant, a wax, petrolatum, animal fats, and a fatty acid. In the present invention, the antifouling agent is preferably at least one kind selected from a silicone oil, a liquid paraffin, and a surfactant.

The silicone oil is preferably free of reactivity with the silicone resin or self-condensability. Any appropriate silicone oil may be adopted as such silicone oil to the extent that the effects of the present invention are not impaired. Such silicone oil is preferably incompatible with an organopolysiloxane in the silicone resin to some extent, and is preferably, for example, a silicone oil represented by the general formula (I) because the antifouling effect can be maintained over a long time period.

$$R^1-\overset{\overset{\displaystyle R^2}{|}}{\underset{\underset{\displaystyle R^2}{|}}{Si}}O-(\overset{\overset{\displaystyle R^2}{|}}{\underset{\underset{\displaystyle R^2}{|}}{Si}}O)\,n-\overset{\overset{\displaystyle R^2}{|}}{\underset{\underset{\displaystyle R^2}{|}}{Si}}-R^1 \qquad (I)$$

In the general formula (I), $R^1$'s may be identical to or different from each other, and each represent an alkyl group having 1 to 10 carbon atoms, an aryl group, an aralkyl group, a fluoroalkyl group, a polyether group, or a hydroxyl group, $R^2$'s may be identical to or different from one another, and each represent an alkyl group having 1 to 10 carbon atoms, an aryl group, an aralkyl group, a polyether group, or a fluoroalkyl group, and n represents an integer of from 0 to 150.

$R^1$'s in the general formula (I) each preferably represent a methyl group, a phenyl group, or a hydroxyl group. $R^2$'s in the general formula (I) each preferably represent a methyl group, a phenyl group, or a 4-trifluorobutyl group.

The silicone oil represented by the general formula (I) has a number-average molecular weight of preferably from 180 to 20, 000, more preferably from 1,000 to 10,000.

The silicone oil represented by the general formula (I) has a viscosity of preferably from 10 centistokes to 10,000 centistokes, more preferably from 100 centistokes to 5,000 centistokes.

Specific examples of the silicone oil represented by the general formula (I) include: a terminal hydroxyl group-containing dimethyl silicone oil in which $R^1$ at each of both terminals or one terminal represents a hydroxyl group; a dimethyl silicone oil in which all of $R^1$'s and $R^2$'s each represent a methyl group; and a phenyl methyl silicone oil obtained by substituting part of the methyl groups of any such dimethyl silicone oil with phenyl groups.

As commercially available products of the silicone oil represented by the general formula (I), there are given, for example: KF-96L, KF-96, KF-69, KF-99, KF-50, KF-54, KF-410, KF-412, KF-414, and FL manufactured by Shin-Etsu Chemical Co. , Ltd; and BY16-846, SF8416, SH200, SH203, SH230, SF8419, FS1265, SH510, SH550, SH710, FZ-2110, and FZ-2203 manufactured by Dow Corning Toray Co., Ltd.

Examples of the surfactant include an anionic surfactant, a cationic surfactant, and a nonionic surfactant.

A diatom adhesion-preventing agent, an agricultural chemical, a drug (such as medetomidine), an enzyme activity inhibitor (such as an alkylphenol or an alkylresorcinol), or an organism repellent may be used as the antifouling agent. The use of any such antifouling agent additionally improves a preventing effect on the adhesion of an aquatic organism such as a diatom or a barnacle.

The antifouling layer may contain any appropriate other additive to the extent that the effects of the present invention are not impaired.

Any appropriate thickness may be adopted as the thickness of the antifouling layer depending on, for example, the applications and use environment of the pressure-sensitive adhesive tape for preventing adhesion of an aquatic organism of the present invention. The thickness of the antifouling layer is preferably from 5 μm to 500 μm. When the thickness of the antifouling layer falls within the range, the antifouling effect effectively works for a sufficiently long time period. In addition, the tape is excellent in handleability, unevenness at a joint portion of the tapes is small, anddirthardlyadheres. When the thickness of the antifouling layer is less than 5 μm, the layer may not be practical because the time period for which its antifouling effect effectively works shortens. When the thickness of the antifouling layer is more than 500 μm, the pressure-sensitive adhesive tape for preventing adhesion of an aquatic organism of the present invention becomes thick and increases in weight. Accordingly, there is a risk in that its handleability deteriorates, the unevenness at the joint portion of the tapes enlarges, and the dirt is liable to adhere.

Any appropriate base material layer may be adopted as the base material layer to the extent that the effects of the present invention are not impaired. A material for such base material layer is preferably excellent in water resistance, strength, flexibility, and breaking property. Examples of such material for the base material layer include a polyurethane resin, a polyurethane acrylic resin, a rubber-based resin, a vinyl chloride resin, a polyester resin, a silicone resin, an elastomer, a fluororesin, a polyamide resin, and a polyolefin resin (such as polyethylene or polypropylene). The number of kinds of such materials for the base material layer may be only one, or may be two or more.

The elongation of the base material layer is preferably 100% or more, more preferably 120% or more, still more preferably 150% or more. When the elongation of the base material layer is 100% or more, the pressure-sensitive adhesive tape for preventing adhesion of an aquatic organism of the present invention can satisfactorily follow the shapes of various adherends and be satisfactorily bonded onto a flat surface. In addition, the tape can be satisfactorily bonded onto, for example, a curved surface portion, 90°-angle portion, or acute angle portion present on the surface of a ship's hull. When the elongation of the base material layer is less than 100%, the tape cannot sufficiently follow the shapes of the various adherends , and hence a wrinkle or a non-adhesion portion of an adhesive occurs, whichmaybe responsible for an external appearance failure or an adhesion failure. An upper limit for the elongation of the base material layer is preferably 2,000% or less from the viewpoint of the strength of the base material layer.

The rupture point stress of the base material layer is preferably 10 MPa or more, more preferably 12 MPa or more, still more preferably 15 MPa or more. When the rupture point stress of the base material layer falls within the range, the cutting of the base material layer upon peeling of the pressure-sensitive adhesive tape for preventing adhesion of an aquatic organism of the present invention that has already been used from an adherend can be suppressed. When the rupture point stress of the base material layer is less than 10 MPa, the base material layer is frequently cut upon peeling of the pressure-sensitive adhesive tape for preventing adhesion of an aquatic organism of the present invention that has already been used from the adherend, and hence working efficiency may remarkably deteriorate. An upper limit for the rupture point stress of the base material layer is preferably 200 MPa or less from the viewpoint of the handleability of the base material layer.

The modulus of elasticity of the base material layer is preferably 4,000 MPa or less, more preferably 1,000 MPa or less, still more preferably 100 MPa or less, particularly preferably 50 MPa or less. When the modulus of elasticity of the base material layer is 4,000 MPa or less, the pressure-sensitive adhesive tape for preventing adhesion of an aquatic organism of the present invention can satisfactorily follow the shapes of various adherends and hence its applicability improves. A lower limit for the modulus of elasticity of the base material layer is preferably 0.1 MPa or more from

the viewpoint of the handleability of the base material layer.

The base material layer may contain any appropriate additive to the extent that the effects of the present invention are not impaired. Examples of such additive include an olefin-based resin, a silicone-based polymer, a liquid acrylic copolymer, a tackifier, an antioxidant, a hindered amine-based light stabilizer, a UV absorbing agent, an antioxidizing agent, an antistatic agent, polyethylene imine, a fatty acid amide, a fatty acid ester, a phosphoric acid ester, a lubricant, a surfactant, a filler, and a pigment (such as calcium oxide, magnesium oxide, silica, zinc oxide, titanium oxide, or carbon black).

The base material layer preferably contains a UV absorbing agent. When the base material layer contains the UV absorbing agent, the weatherability of the pressure-sensitive adhesive tape for preventing adhesion of an aquatic organism of the present invention improves. When the base material layer does not contain any UV absorbing agent, the base material is liable to deteriorate owing to sunlight in outdoor use and hence it may become difficult to maintain the original base material strength. In addition, when the base material deteriorates, the base material layer is frequently cut upon peeling of the pressure-sensitive adhesive tape for preventing adhesion of an aquatic organism of the present invention that has already been used from an adherend, and hence working efficiency may remarkably deteriorate.

Any appropriate thickness may be adopted as the thickness of the base material layer depending on, for example, the applications and use environment of the pressure-sensitive adhesive tape for preventing adhesion of an aquatic organism of the present invention. The thickness of the base material layer is preferably from 1 $\mu$m to 1,000 $\mu$m, more preferably from 10 $\mu$m to 800 $\mu$m, still more preferably from 20 $\mu$m to 500 $\mu$m. When the thickness of the base material layer is caused to fall within the range, the pressure-sensitive adhesive tape for preventing adhesion of an aquatic organism of the present invention can be easily bonded onto a site except a flat surface such as a curved surface or an acute angle surface with good workability, and hardly causes an external appearance failure such as a wrinkle or floating in its surface after the bonding. When the thickness of the base material layer is excessively small, the layer may not be practical because its handleability deteriorates and the layer cannot serve as a base material. When the thickness of the base material layer is excessively large, there is a risk in that the tape cannot sufficiently follow the shape of an adherend, unevenness at a joint portion of the tapes enlarges, and dirt is liable to adhere.

A primer may be applied onto the base material layer in advance or a silane coupling agent may be added to the layer in advance in order that its adhesiveness with the antifouling layer may be improved. When the antifouling layer contains a silicone resin, its adhesiveness with the base material layer may be low owing to low surface energy as a characteristic of the silicone resin. When the adhesiveness between the antifouling layer and the base material layer is low, the antifouling layer that exhibits an antifouling effect peels from the base material layer owing to impact or physical damage during use, and hence it may be impossible to maintain its original antifouling effect. Accordingly, the primer can be applied onto the surface of the base material layer in advance to improve the adhesiveness with the antifouling layer, or a silanol group or alkoxysilane group that reacts with the silicone resin can be introduced into the base material layer by the silane coupling agent and subjected to a condensation reaction with a reactive group on the base material layer at the time of the application of a condensation-type silicone resin to improve the adhesiveness.

The number of the kinds of the silane coupling agents may be only one, or may be two or more. As a specific silane coupling agent that is commercially available, there are given, for example, KBM5103, KBM1003, KBM903, KBM403, and KBM802 manufactured by Shin-Etsu Chemical Co., Ltd.

When the base material layer contains the si lane coupling agent, the content of the silane coupling agent in the base material layer is preferably from 0.01 wt% to 10 wt%. When the content of the silane coupling agent in the base material layer is caused to fall within the range, the base material layer can be suppressed from becoming excessively hard, and sufficient adhesiveness can be expressed between the base material layer and the antifouling layer. When the content of the silane coupling agent in the base material layer exceeds 10 wt%, the silane coupling agent may serve as a cross-linking point to make the base material layer hard. When the content of the silane coupling agent in the base material layer is less than 0.01 wt%, sufficient adhesiveness may not be expressed between the base material layer and the antifouling layer.

Any appropriate pressure-sensitive adhesive layer may be adopted as the pressure-sensitive adhesive layer to the extent that the effects of the present invention are not impaired. A material for such pressure-sensitive adhesive layer is, for example, an acrylic resin-based pressure-sensitive adhesive, an epoxy resin-based pressure-sensitive adhesive, an amino resin-based pressure-sensitive adhesive, a vinyl resin (e.g., vinyl acetate-based polymer)-based pressure-sensitive adhesive, a curable acrylic resin-based pressure-sensitive adhesive, or a silicone resin-based pressure-sensitive adhesive. The number of kinds of the materials for the pressure-sensitive adhesive layer may be only one, or may be two or more.

The 180° peeling adhesive strength of the pressure-sensitive adhesive layer at 23°C and a tension speed of 300 mm/min is preferably 30 N/20 mm or less, more preferably 20 N/20 mm or less, still more preferably 15 N/20 mm or less. When the 180° peeling adhesive strength of the pressure-sensitive adhesive layer at 23°C and a tension speed of 300 mm/min falls within the range, the pressure-sensitive adhesive tape for preventing adhesion of an aquatic organism of the present invention can be easily peeled from an adherend. When the 180° peeling adhesive strength of the pressure-sensitive adhesive layer at 23°C and a tension speed of 300 mm/min exceeds 30 N/20 mm, it becomes difficult to peel the pressure-sensitive adhesive tape for preventing adhesion of an aquatic organism of the present invention that has already been used from an adherend, and hence the working ef f iciencymay remarkably deteriorate. A lower limit for the 180° peeling adhesive strength of the pressure-sensitive adhesive layer at 23°C and a tension speed of 300 mm/min is preferably 5 N/20 mm or more from such a viewpoint that sufficient adhesion can be maintained.

When the pressure-sensitive adhesive layer is brought into contact with seawater, the compressive modulus of elasticity of a portion in the pressure-sensitive adhesive layer brought into contact with the seawater is preferably 1.1 times or more, more preferably 1.2 times or more, still more preferably 1.5 times or more as large as a compressive modulus of elasticity in the pressure-sensitive adhesive layer before the contact with the seawater. When the compressive modulus of elasticity of the portion in the pressure-sensitive adhesive layer brought into contact with the seawater upon bringing of the pressure-sensitive adhesive layer into contact with the seawater is 1.1 times or more as large as the compressive modulus of elasticity in the pressure-sensitive adhesive layer before the contact with the seawater, the layer can express its good adhesion even in water. An upper limit for the ratio of the compressive modulus of elasticity of the portion in the pressure-sensitive adhesive layer brought into contact with the seawater upon bringing of the pressure-sensitive adhesive layer into contact with the seawater to the compressive modulus of elasticity in the pressure-sensitive adhesive layer before the contact with the seawater is preferably 100 times or less from the viewpoint of handleability.

Any appropriate thickness may be adopted as the thickness of the pressure-sensitive adhesive layer depending on, for example, the applications and use environment of the pressure-sensitive adhesive tape for preventing adhesion of an aquatic organism of the present invention. The thickness of the pressure-sensitive adhesive layer is preferably 10 μm or more. When the thickness of the pressure-sensitive adhesive layer is less than 10 μm, there is a risk in that the layer cannot sufficiently follow the shape of an adherend, its adhesion area reduces, and the layer cannot express sufficient adhesion. An upper limit for the thickness of the pressure-sensitive adhesive layer is preferably 100 μm or less from the viewpoint of handleability.

The pressure-sensitive adhesive tape for preventing adhesion of an aquatic organism of the present invention may be produced by any appropriate method. Examples of such method include: a method involving bonding the separately prepared base material layer and pressure-sensitive adhesive layer onto each other, and then applying an antifouling layer formation material onto the base material layer to form the antifouling layer; a method involving applying a pressure-sensitive adhesive layer formation material onto one surface of the base material layer to form the pressure-sensitive adhesive layer, and applying the antifouling layer formation material onto the other surface of the base material layer to form the antifouling layer; and a method involving coextruding a base material layer formation material and the pressure-sensitive adhesive layer formation material to form a laminate of the base material layer and the pressure-sensitive adhesive layer, and then applying the antifouling layer formation material onto the base material layer to form the antifouling layer.

A method of applying the antifouling layer formation material onto the base material layer is, for example, a spray, brush application, a roller, a curtain flow, a roll, dipping, or a coater. The antifouling layer may be formed by applying the antifouling layer formation material onto the base material layer according to any such method and drying the material at, for example, a temperature ranging from room temperature to 250°C (preferably a temperature ranging from room temperature to 180°C). In particular, the following is a preferred embodiment in the pressure-sensitive adhesive tape for preventing adhesion of an aquatic organism of the present invention: the antifouling layer formation material is applied onto the base material layer by adopting a precision coater such as a comma coater.

Examples

The present invention is specifically described below by way of Examples. However, the present invention is by no means limited to Examples below.

<Measurement of ten-point average surface roughness Rz and arithmetic average surface roughness Ra>

A surface profiling system based on optical interferometry was used to measure a surface state in an area of 20 mmx20 mm, and surface roughnesses were determined in terms of ten-point average surface roughness Rz and arithmetic average surface roughness Ra.
Apparatus name:

Wyco NT9100 manufactured by Veeco

Measurement conditions:

Measurement mode: Vertical Scan Interferometory mode (VSI) Magnification of objective lens: x2.5
Magnification of FOV lens (internal lens): ×0.55 Measurement area: 20 mmx20 mm

A sample was placed on a measurement stage and measured for its surface roughnesses in a lateral direction (X-direction) and a vertical direction (Y-direction) at a pitch of 10 μm under the above-mentioned measurement conditions, and the average thereof was determined.
Measurement principle: A surface roughness was measured by converting, into a height, the contrast peak value of interference fringes caused by light reflected from a reference mirror inside the apparatus and light reflected from the sample.

(Ten-point average surface roughness Rz)

The ten-point average surface roughness Rz refers to a value obtained by: extracting only a sampling length L (which is herein 20 mm) from a roughness curve in the direction of its mean line; determining the sum of the average of the absolute values of the heights of the five highest peaks and the average of the absolute values of the depths of the five lowest valleys, the heights and depths being measured from the mean line in the extracted region in the direction of vertical magnification; and expressing the resultant value in micrometers (μm).

(Arithmetic average surface roughness Ra)

The arithmetic average surface roughness Ra refers to a value obtained by: extracting only a sampling length L (which is herein 20 mm) from a roughness curve in the direction of its mean line; and expressing a value obtained by the following equation in micrometers (μm) when the roughness curve is expressed by y=f(x) with the X-axis and the Y-axis being set in the direction of the mean line in the extracted region and the direction of vertical magnification, respectively.

$$Ra = \frac{1}{\ell} \int_0^{\ell} |f(x)| dx$$

<Evaluations for elongation and rupture point stress>

The elongation and rupture point stress of a base material layer were measured in conformity with JIS 7161, JIS 7162, and JIS 7127 by using a tensile tester (AUTOGRAPH AGS-X manufactured by Shimadzu Corporation) and analysis software (TRAPEZIUM X manufactured by Shimadzu Corporation).

<Measurement of 180° peeling adhesive strength>

The pressure-sensitive adhesive of a pressure-sensitive adhesive layer was transferred onto a polyester film (trade name: "S-10," manufactured by Toray Industries, Inc., thickness: 38 μm) with a hand roller to provide a pressure-sensitive adhesive sheet with a base material. The sheet was cut into a test piece having a size measuring 80 mm by 20 mm. A plastic FRP plate reinforced by loading glass cloth into an epoxy resin measuring 30 mm wide by 100 mm long by 2 mm thick was used as an adherend. The test piece was attached onto the adherend by reciprocating a 2-kg roller once and the resultant was left to stand at 23°C for 30 minutes. After that, its initial 180° peeling adhesive strength was measured. A tension speed was set to 300 mm/min.

<Measurement of compressive modulus of elasticity>

The pressure-sensitive adhesive tape was immersed in commercially available simulated seawater at room temperature for 7 days under a state in which its pressure-sensitive adhesive layer was in contact with the seawater, and the compressive moduli of elasticity of a portion in the pressure-sensitive adhesive layer brought into contact with the seawater before and after the immersion were compared. An evaluation was performed under the following conditions. The compressive moduli of elasticity were determined from a load-displacement curve obtained by the measurement with analysis software included with the apparatus.
Evaluation apparatus: Nanoindenter, manufactured by Hysitron Inc. , Tribo Scope
Used indenter: Berkovich, triangular pyramid type
Measurement method: single indentation measurement

Measurement temperature: 25°C
Indentation depth setting: about 1.1 μm

<Outdoor antifouling test>

All pressure-sensitive adhesive tapes to be evaluated were each cut into a size measuring 10 cm by 10 cm and bonded onto a plate made of vinyl chloride having substantially the same size. All of those plates (samples) were each further fixed onto a plate made of vinyl chloride measuring 23 cm wide by 90 cm long. The unit was set at a breakwater in a yacht harbor in the Seto Inland Sea (around Himeji) so as to be 2 m below (at the highest tide) or 0.5 m below (at the lowest tide) the sea level, and all sample surfaces were placed so as to be opposite to the wall surface of the breakwater. The samples were left to stand as they were for 3 months, and were then visually evaluated. Evaluation criteria are as described below.

○: A state in which nearly no adhering organism is present, or even when an organism adheres, the organism can be easily peeled with a finger.

Δ: A state in which an adhering organism adheres to about 10% of the surface.

×: A state in which an adhering organism adheres to about 20% of the surface.

××: A state in which an adhering organism adheres to about 30% or more of the surface.

[Production Example 1]

<Production of base material layer>

71 Parts by weight of isobornyl acrylate (trade name: " IBXA, " manufactured by Osaka Organic Chemical Industry Ltd.), 19 parts by weight of n-butyl acrylate (BA, manufactured by TOAGOSEI CO., LTD.), and 10 parts by weight of acrylic acid (AA) as (meth) acrylic monomers, 68.4 parts by weight of poly(oxytetramethylene) glycol having a number-average molecular weight of 650 (PTMG650, manufactured by Mitsubishi Chemical Corporation) as a polyol, and 0.01 part by weight of dibutyltin dilaurate (DBTL) as a catalyst were loaded into a reaction vessel provided with a cooling tube, a temperature gauge, and a stirring device. While the mixture was stirred, 25.5 parts by weight of hydrogenated xylylene diisocyanate (HXDI, manufactured by Mitsui Chemical Polyurethane) were dropped to the mixture, followed by a reaction at 65°C for 5 hours. Thus, a urethane polymer-acrylic monomer mixture was obtained. After that, 6.1 parts by weight of hydroxyethyl acrylate (trade name: "ACRYCS HEA, " manufactured by TOAGOSEI CO. , LTD.) were further loaded into the mixture, and the whole was subjected to a reaction at 65°C for 1 hour to provide an acryloyl group-terminated urethane polymer-acrylic monomer mixture. After that, 1 part by weight of 3-acryloxypropyl trimethoxysilane (KBM-5103, manufactured by Shin-Etsu Chemical Co., Ltd.), 0.25 part by weight of diphenyl(2,4,6-trimethoxybenzoyl)phosphine oxide (trade name: "Lucirin TPO," manufactured by BASF) as a photopolymerization initiator, 1.25 parts by weight of a UV absorbing agent (trade name: "TINUVIN 123," manufactured by BASF), and 0.6 part by weight of an antioxidizing agent (trade name: "TINUVIN 400," manufactured by BASF) were added to the acryloyl group-terminated urethane polymer-acrylic monomer mixture to provide a syrup.

The syrup was applied onto the surface of a separator (trade name: "MRF38," manufactured by Mitsubishi Plastics, Inc., thickness: 38 μm) with an applicator to form a base material syrup layer having a thickness of 150 μm. A cover separator (trade name: "MRF38," manufactured by Mitsubishi Plastics, Inc., thickness: 38 μm) was attached onto the base material syrup layer with a hand roller, and the resultant was irradiated with UV light from a UV lamp (BL type) (UV irradiance: 3.4 mW/cm$^2$, cumulative dose: 2,000 mJ/cm$^2$) to provide a base material layer having a thickness of 150 μm.

The produced base material layer was evaluated for its elongation and rupture point stress. As a result, the elongation was 420% and the rupture point stress was 27 MPa.

[Production Example 2]

<Production of pressure-sensitive adhesive layer>

90 Parts by weight of 2-ethylhexyl acrylate (2EHA, manufactured by TOAGOSEI CO., LTD.) and 10 parts by weight of acrylic acid (AA) as (meth)acrylic monomers, and 0.05 part by weight of 2,2-dimethoxy-1,2-diphenylethan-1-one (trade name: "IRGACURE 651, " manufactured by BASF) as a photopolymerization initiator were loaded into a

reaction vessel provided with a cooling tube, a nitrogen-introducing tube, a temperature gauge, and a stirring machine, and were dispersed. While the dispersion was stirred, UV light was applied from an upper portion in a stream of nitrogen to convert part of the monomers into a polymer, thereby adjusting the viscosity of the dispersion so that the dispersion could be applied. Thus, an acrylic monomer mixture was obtained. 0.08 Part by weight of 1,6-hexanediol diacrylate (HDDA) was added as a cross-linking agent to the acrylic monomer mixture, the mixture was applied onto the surface of a separator (trade name: "MRF50," manufactured by Mitsubishi Plastics, Inc., thickness: 50 μm) with an applicator, a cover separator (trade name: "MRF38," manufactured by Mitsubishi Plastics, Inc., thickness: 38 μm) was attached onto the mixture with a hand roller, and the resultant was irradiated with UV light from a UV lamp (BL type) (UV irradiance: 3.4 $mW/cm^2$, cumulative dose: 2,000 $mJ/cm^2$) to provide a pressure-sensitive adhesive layer having a thickness of 50 μm.

The 180° peeling adhesive strength of the produced pressure-sensitive adhesive layer at 23°C and a tension speed of 300 mm/min was measured. As a result, the adhesive strength was found to be 13.3 N/20 mm.

[Example 1]

<Preparation of antifouling layer formation material>

A silicone oil (SH200-100cs, nonreactive silicone oil, manufactured by Shin-Etsu Chemical Co., Ltd.) was added as an antifouling agent to a silicone resin (KE-44, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (1) to be applied onto a base material layer.

<Production of pressure-sensitive adhesive tape>

The pressure-sensitive adhesive layer produced in Production Example 2 was bonded onto the base material layer produced in Production Example 1 by transfer. After that, the antifouling layer formation material (1) was applied onto the surface of the base material layer opposite to the pressure-sensitive adhesive layer with a comma coater, and was dried in an oven at 150°C for 15 minutes to produce a pressure-sensitive adhesive tape (1).

The pressure-sensitive adhesive tape (1) had the construction "antifouling layer (thickness=75 μm)/base material layer (thickness=150 μm)/pressure-sensitive adhesive layer (thickness=50 μm)."

Table 2 shows the results of the evaluations.

[Example 2]

A silicone oil (SH200-100cs, nonreactive silicone oil, manufactured by Shin-Etsu Chemical Co., Ltd.) was added as an antifouling agent to a silicone resin (KE-44, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (2) to be applied onto a base material.

A pressure-sensitive adhesive tape (2) was produced with the antifouling layer formation material (2) in the same manner as in Example 1.

The pressure-sensitive adhesive tape (2) had the construction "antifouling layer (thickness=75 μm)/base material layer (thickness=150 μm)/pressure-sensitive adhesive layer (thickness=50 μm)."

Table 2 shows the results of the evaluations.

[Example 3]

A silicone oil (SH200-100cs, nonreactive silicone oil, manufactured by Shin-Etsu Chemical Co., Ltd.) was added as an antifouling agent to a silicone resin (KE-44, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (3) to be applied onto a base material.

A pressure-sensitive adhesive tape (3) was produced with the antifouling layer formation material (3) in the same manner as in Example 1.

The pressure-sensitive adhesive tape (3) had the construction "antifouling layer (thickness=75 μm)/base material layer (thickness=150 μm)/pressure-sensitive adhesive layer (thickness=50 μm)."

Table 2 shows the results of the evaluations.

[Example 4]

A silicone oil (SH200-100cs, nonreactive silicone oil, manufactured by Shin-Etsu Chemical Co., Ltd.) was added as an antifouling agent to a silicone resin (KE-44, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (4) to be applied onto a base material.
A pressure-sensitive adhesive tape (4) was produced with the antifouling layer formation material (4) in the same manner as in Example 1.
The pressure-sensitive adhesive tape (4) had the construction "antifouling layer (thickness=75 μm)/base material layer (thickness=150 μm)/pressure-sensitive adhesive layer (thickness=50 μm)."
Table 2 shows the results of the evaluations.

[Example 5]

A liquid paraffin (hydrocarbon-based liquid paraffin, manufactured by Wako Pure Chemical Industries, Ltd.) was added as an antifouling agent to a silicone resin (KE-44, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (5) to be applied onto a base material.
A pressure-sensitive adhesive tape (5) was produced with the antifouling layer formation material (5) in the same manner as in Example 1.
The pressure-sensitive adhesive tape (5) had the construction "antifouling layer (thickness=75 μm)/base material layer (thickness=150 μm)/pressure-sensitive adhesive layer (thickness=50 μm)."
Table 2 shows the results of the evaluations.

[Example 6]

A surfactant (DKS-NL-DASH400, nonionic ether-type surfactant, manufactured by Dai-ichi Kogyo Seiyaku Co., Ltd.) was added as an antifouling agent to a silicone resin (KE-44, room temperature vulcanizing (RTV) resin, manufactured by Shin-Etsu Chemical Co., Ltd.) according to compounding shown in Table 1, and then the antifouling agent was uniformly dissolved or dispersed in the resin by stirring the mixture with a homomixer. After the stirring, the mixture was defoamed to provide an antifouling layer formation material (5) to be applied onto a base material.
A pressure-sensitive adhesive tape (5) was produced with the antifouling layer formation material (5) in the same manner as in Example 1.
The pressure-sensitive adhesive tape (5) had the construction "antifouling layer (thickness=75 μm)/base material layer (thickness=150 μm)/pressure-sensitive adhesive layer (thickness=50 μm)."
Table 2 shows the results of the evaluations.

[Comparative Example 1]

The pressure-sensitive adhesive layer produced in Production Example 2 was bonded onto the base material layer produced in Production Example 1 by transfer. After that, a self polishing antifoulingpaint (Seajet 033, manufactured by CHUGOKU MARINE PAINTS, LTD.) was applied onto the surface of the base material layer opposite to the pressure-sensitive adhesive layer twice with a hand roller in accordance with the instruction manual, and dried at room temperature to produce a pressure-sensitive adhesive tape (C1).
The pressure-sensitive adhesive tape (C1) had the construction "antifouling layer (thickness=about 75 μm)/base material layer (thickness=150 μm)/pressure-sensitive adhesive layer (thickness=50 μm)."
Table 2 shows the results of the evaluations.

[Comparative Example 2]

The pressure-sensitive adhesive layer produced in Production Example 2 was bonded onto the base material layer produced in Production Example 1 by transfer. After that, a self polishing antifoulingpaint (Seajet 034, manufactured by CHUGOKU MARINE PAINTS, LTD.) was applied onto the surface of the base material layer opposite to the pressure-sensitive adhesive layer twice with a hand roller in accordance with the instruction manual, and dried at room temperature to produce a pressure-sensitive adhesive tape (C2).
The pressure-sensitive adhesive tape (C2) had the construction "antifouling layer (thickness=about 75 μm)/base

material layer (thickness=150 μm)/pressure-sensitive adhesive layer (thickness=50 μm)."

Table 2 shows the results of the evaluations.

[Table 1]

| | Antifouling layer | | | |
|---|---|---|---|---|
| | Resin | Number of parts by weight of added resin | Antifouling agent | Number of parts by weight of added antifouling agent |
| Example 1 | Silicone resin KE-44 | 100 | Silicone oil SH200-100cs | 10 |
| Example 2 | Silicone resin KE-44 | 100 | Silicone oil SH200-100cs | 20 |
| Example 3 | Silicone resin KE-44 | 100 | Silicone oil SH200-100cs | 30 |
| Example 4 | Silicone resin KE-44 | 100 | Silicone oil SH200-100cs | 50 |
| Example 5 | Silicone resin KE-44 | 100 | Liquid paraffin | 10 |
| Example 6 | Silicone resin KE-44 | 100 | Surfactant | 10 |
| Comparative Example 1 | Self polishing antifouling paint (Seajet 033) | | | |
| Comparative Example 2 | Self polishing antifouling paint (Seajet 034) | | | |

[Table 2]

| | Compressive modulus of elasticity | | Ten-point average surface roughness Rz (μm) | Arithmetic average surface roughness Ra (μm) | Outdoor antifouling test |
|---|---|---|---|---|---|
| | Compressivemodulus of elasticity of pressure-sensitive adhesive layer before contact with seawater (MPa) | Compressive modulus of elasticity of pressure-sensitive adhesive layer after contact with seawater (MPa) | | | |
| Example 1 | 4.04 | 18.80 | 1.70 | 0.13 | ○ |
| Example 2 | | | 1.88 | 0.12 | ○ |
| Example 3 | | | 1.89 | 0.09 | ○ |
| Example 4 | | | 1.67 | 0.12 | ○ |
| Example 5 | | | 1.72 | 0.15 | ○ |
| Example 6 | | | 1.90 | 0.17 | ○ |
| Comparative Example 1 | | | 76.90 | 9.20 | Δ |
| Comparative Example 2 | | | 46.69 | 4.95 | Δ |

Industrial Applicability

The pressure-sensitive adhesive tape for preventing adhesion of an aquatic organism of the present invention can be suitably utilized in an underwater structure (such as a ship, a buoy, a harbor facility, a maritime oil field facility,

a water passage for power plant cooling water, a water passage for factory cooling water, or a water floating passage) because the tape can prevent an aquatic organism from adhering to the structure to proliferate.

Reference Signs List

| | |
|---|---|
| **1** | release film |
| **2** | antifouling layer |
| **3** | base material layer |
| **4** | pressure-sensitive adhesive layer |
| **100** | pressure-sensitive adhesive tape for preventing adhesion of aquatic organism |

## Claims

**1.** A pressure-sensitive adhesive tape for preventing adhesion of an aquatic organism, comprising an antifouling layer, a base material layer, and a pressure-sensitive adhesive layer in the stated order, wherein the antifouling layer has a ten-point average surface roughness Rz of 5.0 μm or less.

**2.** Apressure-sensitive adhesive tape for preventing adhesion of an aquatic organism according to claim 1, wherein the antifouling layer has an arithmetic average surface roughness Ra of 1.0 μm or less.

**3.** Apressure-sensitive adhesive tape for preventing adhesion of an aquatic organism according to claim 1 or 2, wherein the antifouling layer comprises a silicone resin.

**4.** A pressure-sensitive adhesive tape for preventing adhesion of an aquatic organism according to claim 3, wherein the antifouling layer comprises an antifouling agent.

**5.** A pressure-sensitive adhesive tape for preventing adhesion of an aquatic organism according to claim 4, wherein a content of the antifouling agent with respect to the silicone resin is 2 wt% or more.

**6.** A pressure-sensitive adhesive tape for preventing adhesion of an aquatic organism according to claim 4 or 5, wherein the antifouling agent comprises at least one kind selected from a silicone oil, a liquid paraffin, and a surfactant.

**7.** A pressure-sensitive adhesive tape for preventing adhesion of an aquatic organism according to any one of claims 1 to 6, wherein the base material layer has an elongation of 100% or more and a rupture point stress of 10 MPa or more.

**8.** A pressure-sensitive adhesive tape for preventing adhesion of an aquatic organism according to any one of claims 1 to 7, wherein the pressure-sensitive adhesive layer has a 180° peeling adhesive strength at 23°C and a tension speed of 300 mm/min of 30 N/20 mm or less.

**9.** Apressure-sensitive adhesive tape for preventing adhesion of an aquatic organism according to any one of claims 1 to 8, wherein when the pressure-sensitive adhesive layer is brought into contact with seawater, a compressive modulus of elasticity of a portion in the pressure-sensitive adhesive layer brought into contact with the seawater is 1.1 times or more as large as a compressive modulus of elasticity in the pressure-sensitive adhesive layer before the contact with the seawater.

FIG. 1

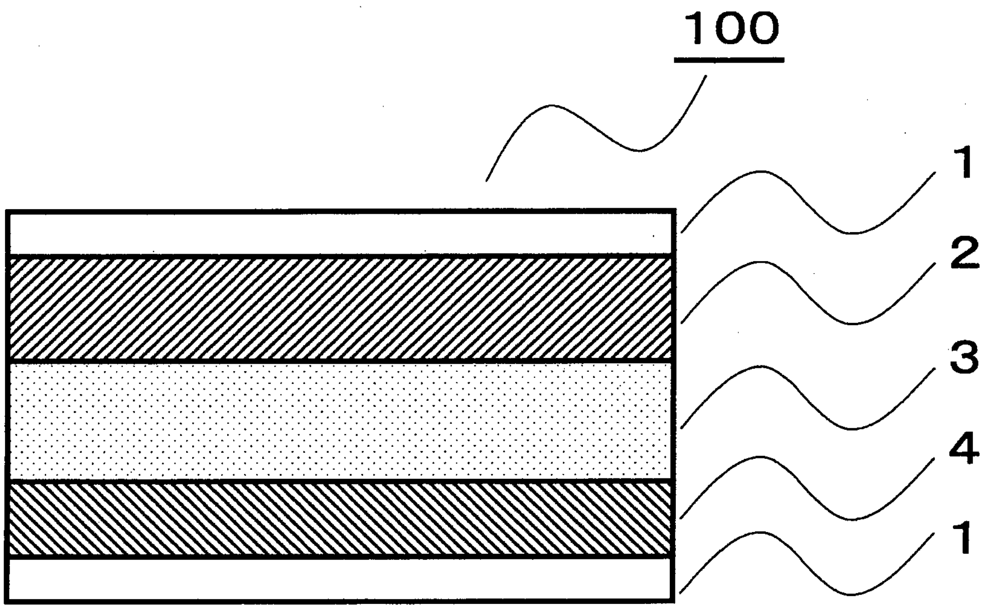

## INTERNATIONAL SEARCH REPORT

International application No. PCT/JP2013/058654

A. CLASSIFICATION OF SUBJECT MATTER

*C09J7/02*(2006.01)i, *B32B27/00*(2006.01)i, *C09D5/16*(2006.01)i, *C09D7/12*(2006.01)i, *C09D183/04*(2006.01)i

According to International Patent Classification (IPC) or to both national classification and IPC

B. FIELDS SEARCHED

Minimum documentation searched (classification system followed by classification symbols)
C09J1/00-201/10, B32B1/00-43/00, C09D1/00-201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-526528 A (Raytheon Co.), 24 November 2006 (24.11.2006), claims; paragraphs [0014], [0016], [0018], [0023] & US 2004/0241433 A1 & EP 1629058 A1 & WO 2004/111149 A1 | 1-9 |
| Y | JP 06-033024 A (Kansai Paint Co., Ltd.), 08 February 1994 (08.02.1994), claims; paragraph [0061]; examples (Family: none) | 1-9 |
| Y | JP 10-309518 A (Kansai Paint Co., Ltd.), 24 November 1998 (24.11.1998), claims; paragraphs [0013] to [0022]; examples (Family: none) | 1-9 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 10 June, 2013 (10.06.13) | 18 June, 2013 (18.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No. PCT/JP2013/058654

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2006-312602 A (Denki Kagaku Kogyo Kabushiki Kaisha), 16 November 2006 (16.11.2006), claims; paragraph [0030] (Family: none) | 1-9 |
| Y | JP 63-021144 A (Showa Denko Kabushiki Kaisha), 28 January 1988 (28.01.1988), claims (Family: none) | 1-2,7-9 |
| Y | JP 06-145617 A (Sekisui Chemical Co., Ltd.), 27 May 1994 (27.05.1994), claims (Family: none) | 1-2,7-9 |
| Y | JP 09-025887 A (Hitachi, Ltd.), 28 January 1997 (28.01.1997), paragraphs [0006] to [0007] (Family: none) | 1-9 |
| A | JP 62-240604 A (Ameron Inc.), 21 October 1987 (21.10.1987), page 4, upper left column & US 4670481 A & EP 234822 A2 | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63062487 B
- JP 1054397 B
- JP 3000101 B
- JP 2002069246 A